# EUROPEAN PATENT SPECIFICATION

(11) **EP 3 219 489 B1**
(45) Date of publication and mention of the grant of the patent: **01.05.2019**
(21) Application number: 16161009.2
(22) Date of filing: 17.03.2016
(51) Int. Cl.: B32B 37/20, B32B 37/02, B32B 27/32, B32B 37/00, B32B 37/26

(54) **THIN FILM WITH SEPARABLE CARRIER AND MANUFACTURING METHOD THEREOF**
DÜNNSCHICHTFILM MIT TRENNBAREM TRÄGER UND DESSEN HERSTELLUNGSVERFAHREN
FILM À COUCHES MINCES À SUPPORT SÉPARABLE ET PROCÉDÉ DE LA FABRICATION

(43) Date of publication of application: 20.09.2017
(73) Proprietor: DingZing Advanced Materials Inc., Kaohsiung 812 (TW)
(72) Inventor: LIN, Keng-Hsien, 812 Kaohsiung City (TW)
(74) Representative: Lang, Christian

(56) References cited:
- EP-A1- 2 386 410
- WO-A1-2007/029979
- US-A1- 2014 147 642

## Description

### BACKGROUND OF THE INVENTION

### (a) Field of the Invention

The present invention relates to a thin film article 7, and more particularly to a thin film article 7 with separable carrier and manufacturing method thereof.

### (b) Description of the Prior Art

With the advancement of technology, plastic products have become closely bound up with people's lifestyles. Examples include sports products, clothing, electronic products, various packaging for food products, or containers used for preserving products. With its characteristic changeable low-hardness and shape, the applications of plastic products are considerably widespread and have become indispensable articles in people's lives.

Wherein, thermoplastic polyurethanes (TPU), with advantages including extensibility, wear resistance, grease-proof, transparency, and flexibility, are seen as a replacement low-hardness material for PVC (polyvinyl chloride). To satisfy environmental requirements of different fields, the shape and structure of elastomer materials will vary depending on the specific final purpose of the product, and will include thread, cord, band, film, fabric, and a plurality of other forms.

However, when elastomer materials are used to manufacture thin films, because the polymer material used to produce the films has properties of stickiness or tackiness, thus, when the elastomer film is being extruded and wound to become a spool, the thin films easily adhere to each other or caking occurs, with problems arising therefrom leading to difficulties or inability to unroll the spool. Furthermore, when the thin films age or are stored in a tepid environment, the caking and sticking becomes even more evident, resulting in the product becoming a reject. Hence, there is an urgent need for improvement.

Conventional thin film articles are, for example, known from documents WO 2007/029979 A1 and EP 2 386 410 A1. With reference to WO 2007/029979 A1 a release film is disclosed, which is obtained by laminating a layer B, consisting of polypropylene resin (PP), on one side of a layer A, consisting e.g. of a polyethylene-containing material, such as PET, and further laminating another layer B or another layer C, consisting of polyethylene (PE) resin, on the other side of said layer A, wherein layer A has a thickness of 10-100 µm, layer B has a thickness of 2- 15 µm and layer C has a thickness of 100-300 µm. In addition, in EP 2 386 410 A1 another conventional polymer film structure is disclosed, which includes a first, second and third layer sequentially connected with each other, wherein each of the first, second and third layer includes at least one polymer material, preferably PE or PP. Further referring to Figure 1, which shows a "Transfer Printing Thin Film" disclosed in the Taiwan Patent No. 1308115. The patent provides a structural design for a transfer printing thin film, which is structured from a transparent (or opaque) substrate layer 11, a release layer 12, a thermosol film or a sensor film 13, and a graphic layer 14. An appropriate amount of antistick agent is added to the sensor film 13, and the graphic layer 14 uses a lithographic plate, a relief plate, or a gravure plate for printing, or uses a printer to directly output graphics that rapidly form on the sensor film 13. Because of the addition of an antistick agent, thus, the transfer printing thin film may be freely rolled up into a tubular form or sheet form while preventing the graphics from sticking together and becoming damaged when the scrolls are rolled up or stacked on top of each other.

However, from the above description it can be seen that the transfer printing thin film of the prior art still has the following shortcomings in actual use:

### 1. Damages the flexibility of the thin film

The composition of the 5%∼50% of an antistick agent added to the sensor film 13 comprises compounds including talcum powder, TiO₂ (titanium dioxide), SiO₂ (silicon dioxide), organic or inorganic compounds, and high molecular compounds to prevent the complications of the transfer printing thin film sticking and becoming damaged when the scrolls are rolled up or stacked on top of each other. Wherein, adding an excessive amount of the anticaking agents talcum powder or SiO₂ will damage the flexibility of the thin film and deprive the transfer printed articles the ability to roll-up and unroll.

### 2. Increases shipment and delivery cost

Regarding the transfer printing thin film of the prior art structured from the substrate layer 11, the release layer 12, the film 13. and the graphic layer 14, during the production process, the transfer printing thin film is rolled up to form a tubular form to facilitate subsequent storage and transportation. However, because the transfer printing thin film is structured from four layers, apprehension arises about the increased volume of the entire scroll, along with related complications in transportation. Accordingly, the transfer printing thin film of the prior art is unable to achieve reducing cost overheads.

### 3. Unable to increase manufacturing process efficiency

Because the release layer 12 is positioned between the substrate layer 11 and the film 13, its function comes into effect when the graphic layer 14 is formed on the film 13, whereby the release layer 12 is used to enable the substrate layer 11 to be torn off. However, equipment for the release layer 12 costs millions of dollars, moreover, the manufacturing process is mired in complicated details, and requires a great deal of manual operation. Therefore, the process not only uses up manufacturing working hours, but also increases cost overheads, and is thus unable to effectively increase manufacturing process efficiency.

The aforementioned shortcomings are all evident in the transfer printing thin film of the prior art arising from the various problems encountered in use. Hence, designing a article able to effectively improve the shortcomings in the existing thin film manufacturing process, and develop a method able to accomplish simplifying the manufacturing process time and increase production efficiency would certainly able to achieve the object of effectively reducing costs and increasing market competitiveness.

### SUMMARY OF THE INVENTION

Accordingly, one of the objects of the present invention lies in providing a manufacturing method for a thin film article with separable carrier that comprises a first preparation step, a second preparation step, a laminating step, a coating step, and a separating step.

First, the first preparation step is carried out to prepare a release layer using a polypropylene material. Next, the second preparation step is carried out to prepare a carrier layer using a polyethylene material. And then the laminating step is carried out to separably laminate the release layer onto one surface of the carrier layer to obtain a top-bottom laminated separable carrier. Next, the coating step is carried out, wherein a low-hardness material is coated onto the other surface of the carrier layer to obtain a thin film substrate with a lamination of the separable carrier. Finally, the separating step is carried out, wherein the release layer on the thin film substrate is separated from the carrier layer to obtain the thin film article.

The beneficial effect of the present invention lies in preventing the thin film layers disposed on the second surface of the carrier layer from sticking together by using the carrier layer made from polyethylene provided with the advantages of rapid crystallization and shaping, thereby effectively improving the difficulty in unrolling the thin film layer after being wound into a spool, and avoiding the complications of cracking on the surface of the thin film layer after unrolling, which would result in the product becoming a reject, thus effectively increasing the yield of merchantable products. The material characteristics of the carrier layer and the release layer are provided with the advantages including low polarity and poor adhesivity, thereby enabling easy separation of the release layer. Furthermore, using the reusable release layer eliminates the need to carry out the first drying and heating step and the first preparation step, which, in one aspect, effectively shortens the line of production and increases efficiency, and in another aspect, reduces the use of polypropylene, thereby achieving the environmental requirements for recycling to minimize environment pollution.

To enable a further understanding of said objectives and the technological methods of the invention herein, a brief description of the drawings is provided below followed by a detailed description of the preferred embodiments.

### BRIEF DESCRIPTION OF THE DRAWINGS

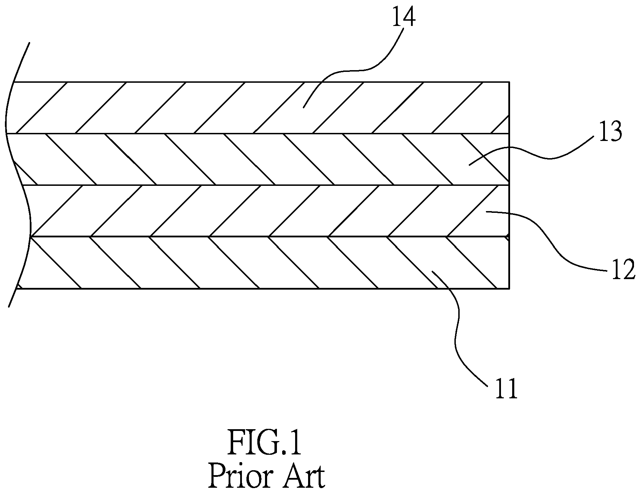

Figure 1 is a schematic cross-sectional view depicting a transfer printing thin film disclosed in the Taiwan Patent No. I308115 of the prior art.
Figure 2 is a schematic cross-sectional view depicting a preferred embodiment of a thin film article with separable carrier of the present invention.
Figure 3 is a schematic flow chart of a manufacturing method for a thin film article with separable carrier of the present invention.
Figure 4 is a schematic cross-sectional view depicting separation of a release layer from a carrier layer in a preferred embodiment of the present invention.

### DETAILED DESCRIPTION OF THE PREFERRED EMBODIMENTS

As for the characteristics related to this patent application and technology contents regarding the present invention, a detailed description of the preferred embodiments along with the accompanying drawings is clearly presented below.

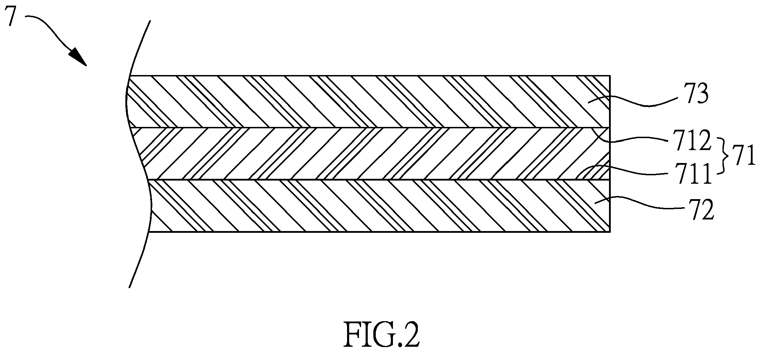

Referring to Figure 2, which shows a preferred embodiment of a thin film article and with separable carrier and manufacturing method thereof of the present invention, wherein a thin film article 7 with separable carrier comprises a carrier layer 71, a release layer 72, and a thin film layer 73.

The carrier layer 71 is made from a polyethylene material, and comprises a first surface 711, and an opposite second surface 712. The thickness of the carrier layer 71 lies between 0.01mm∼0.1mm.

The release layer 72 is separably disposed on top of the first surface 711 of the carrier layer 71. The release layer 72 is made from a polypropylene material and has a thickness that lies between 0.05mm∼ 0.3mm.

Because the release layer 72 is made from a polypropylene material, and the hardness of polypropylene is greater than that of the polyethylene material of the carrier layer 71, and the release layer 72 is further reinforced by having a thickness range that is about 3∼5 times greater than the thickness range of the carrier layer 71, thus, the carrier layer 71 can be supported by the release layer 72 positioned below thereof. In addition, the release layer 72 will not easily crease, thus facilitating use for recycling.

The thin film layer 73 is disposed on the second surface 712 of the carrier layer 71. The thin film layer 73 is made from a low-hardness material, which has a hardness range that lies between Shore hardness 65 Shore D to 55 Shore A.

In the preferred embodiment of the present invention, the low-hardness material is a thermoplastic polyurethane material with a thickness that lies between 0.03mm∼0.005mm. In actual use, different types of plastic materials can be chosen according to use requirements, and is not limited to any one type.

Because polyethylene and polypropylene are provided with advantages including rapid crystallization and shaping, it is hereby specially described that by using the carrier layer 71 made of polyethylene, the carrier layer 71 is prevented from sticking to the thin film layer 73 disposed on the second surface 712 of the carrier layer 71, thereby effectively improving difficulty in unrolling the thin film layer 73 after winding into a spool or complications resulting from cracking in the surface of the thin film layer 73 and the product becoming a reject after unrolling, thus effectively increasing the yield of merchantable products. The material characteristics of the carrier layer 71 and the release layer 72 are provided with the advantages including low polarity and poor adhesivity, which are able to quicken easy separation of the release layer 72.

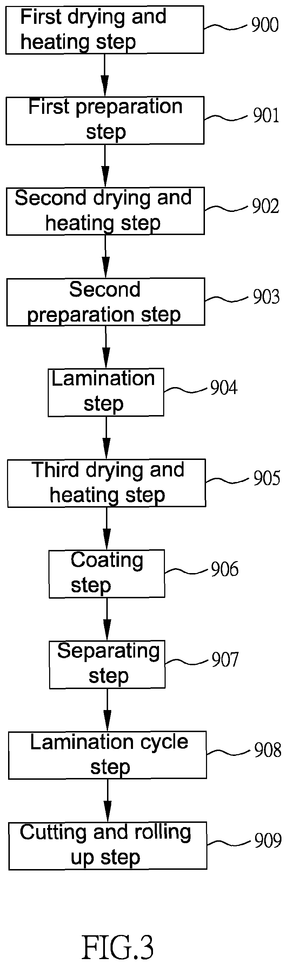

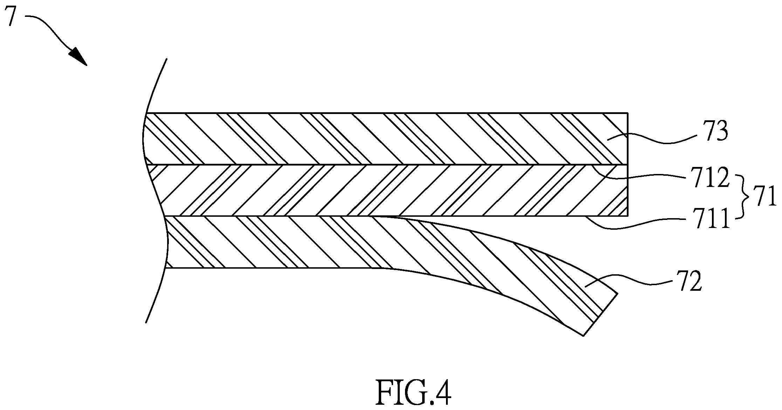

Referring to Figures 3 and 4, according to the aforementioned thin film article 7 with separable carrier, the manufacturing method for a thin film article with separable carrier of the present invention comprises a first drying and heating step 900, a first preparation step 901, a second drying and heating step 902, a second preparation step 903, a lamination step 904, a third drying and heating step 905, a coating step 906, a separating step 907, a lamination cycle step 908, and a cutting and rolling up step 909.

First, the first drying and heating step 900 is carried out whereby, after first drying the polypropylene, heating is applied to melt the polypropylene. Next, the first preparation step 901 is carried out to prepare the release layer 72 using a polypropylene material. In the first preparation step 901, the polypropylene is first extruded and flattened prior to output to obtain the uniformly thin release layer 72. In the preferred embodiment of the present invention, the thickness of the release layer 72 is 0.15mm.

Then, the second drying and heating step 902 is carried out whereby the polyethylene is dried prior to heating to melt the polyethylene. Next, the second preparation step 903 is carried out to prepare the carrier layer 71 using a polyethylene material. In the second preparation step 903, the polyethylene is first extruded and flattened prior to output to obtain the uniformly thin carrier layer 71. In the preferred embodiment of the present invention, the thickness of the carrier layer 71 is 0.07mm.

When carrying out the first and second drying and heating steps 900, 902, a drying machine may be used to first separately dry the plastic material compounds of polyethylene and polypropylene to evaporate superfluous water, thereby preventing complications of air bubbles forming on the respective surfaces of the plastic material compounds during follow-up processing, and reducing product rejects.

In addition, when carrying out the first and second preparation steps 901, 903, an extruder is used to separately outwardly extrude the polyethylene and the polypropylene. During the extrusion process, a filter screen may be disposed at the outlet area of the extruder to increase the quality of the plastic material compounds. After which, a flatting machine is used to separately flatten the polyethylene and the polypropylene prior to output to respectively obtain the uniformly thin carrier layer 71 and the release layer 72, thereby improving the degree of adhesion of the carrier layer 71 and the release layer 72 when carrying out the subsequent lamination step 904.

Next, the lamination step 904 is carried out whereby the release layer 72 is separably laminated onto the first surface 711 of the carrier layer 71 to obtain a top-bottom laminated separable carrier.

Then, the third drying and heating step 905 is carried out whereby, after drying the low-hardness material, heating is applied to melt the low-hardness material. After which the coating step 906 is carried out whereby the low-hardness material is coated onto the second surface 712 of the carrier layer 71 to form the thin film layer 73 on the carrier layer 71, thereby obtaining a thin film substrate with a lamination of the separable carrier.

In the preferred embodiment of the present invention, the low-hardness material is preferably made from a thermoplastic polyurethane material, and the preferred thickness of the thin film layer 73 is 0.015mm. In addition, the coating step 906 is used to coat the low-hardness material coat onto the carrier layer 71. And in actual use, different implementation methods may be used to achieve coating, such as laminating, but is not limited by such.

Next, the separating step 907 is carried out whereby the release layer 72 on the thin film substrate is separated from the carrier layer 71 to obtain the thin film article 7.

With the design of the ultra thin carrier layer 71 having a thickness of only 0.07mm and the thin film layer 73 disposed on the second surface 712 of the carrier layer 71, the thin film layer 73 can be supported by the carrier layer 71 after the release layer 72 is separated from the carrier layer 71, and will not cause creasing on the surface of the thin film layer 73 because of the release layer 72 being torn off, thereby achieving an increase in the yield of merchantable products.

In addition, by only carrying out the first drying and heating step 900 and the first preparation step 901, the release layer 72 made from polypropylene is able to replace release paper widely used in the market, thereby, not only eliminating the need to use expensive manufacturing equipment, but also, because of the simple manufacturing process, reducing the use of man power, thereby effectively reducing the manufacturing process time and manufacturing costs. Accordingly, the present invention achieves the effectiveness of increasing the manufacturing process efficiency.

And then, the lamination cycle step 908 is carried out whereby after separating the release layer 72 from the thin film substrate, lamination of the carrier layer 71 is repeated in the second preparation step 903, and then implementation of the aforementioned lamination step 904, the coating step 906, and the separating step 907 are repeated to obtain another of the thin film article 7.

Use of the reusable release layer 72 enables eliminating carrying out the first drying and heating step 900 and the first preparation step 901, while enabling lamination of the release layer 72 to the carrier layer 71. In one aspect, the line of production is effectively shortened and production efficiency is increased, and in another aspect, the use of polypropylene is reduced to achieve the environmental requirements for recycling to minimize environment pollution .

It is hereby specially described that when the user does not require reusing the release layer 72, then the lamination cycle step 908 may be eliminated to continue with the follow-up manufacturing process. Such being dependent on use requirements, but is not limited by such.

Finally, the cutting and rolling up step 909 is carried out whereby an appropriate length of the thin film article 7 separated from the release layer 72 is chosen for a cutting and rolling up process. In actual use, a cutting machine is installed to cut predetermined lengths of the thin film article 7, and a rolling up machine is further installed to roll up the cut thin film article 7 to carry out subsequent shipment and storage procedures.

It is preferable that the thin film article 7 structured from the carrier layer 71 and the thin film layer 73 not only does not increase the volume of the entire rolled up thin film article 7, but also increases the convenience of transportation and decreases storage volume, all of which enable achieving a reduction in overhead costs.

Furthermore, apart from using the characteristic of the release layer 72 made from polypropylene that allows it to not adhere easily, which avoids sticking complications after cutting and rolling up the thin film article 7, moreover, the carrier layer 71 may also serve as a protective coating for the thin film layer 73 to improve the up-to-standard rate of the rolled up thin film article 7 when unfolding and using at the client end, thus further increasing market competitiveness.

From the aforementioned description, it can be understood that the thin film article with separable carrier and manufacturing method thereof of the present invention is surely provided with the following advantages: 1. Increases yield of merchantable products

By using the ultra thin carrier layer 71 and disposing the thin film layer 73 on the second surface 712 of the carrier layer 71, after the release layer 72 is separated from the carrier layer 71, the thin film layer 73 is then supported by the carrier layer 71; moreover, creasing on the surface of the thin film layer 73 is prevented from occurring because of the release layer 72 being torn off, thereby achieving an increase in the yield of merchantable products.

### 2. Reduces shipment and delivery cost

Using the thin film article 7 structured from the carrier layer 71 and the thin film layer 73 not only does not increase the volume of the entire rolled up thin film article 7, but also increases the convenience of transportation and decreases storage volume, all of which enable achieving a reduction in overhead costs. Furthermore, the carrier layer 71 may also serve as a protective coating for the thin film layer 73 to improve the up-to-standard rate of the rolled up thin film article 7 when unfolding and using at the client end, thus further increasing market competitiveness.

### 3. Increases manufacturing process efficiency

The simple manufacturing process of the release layer 72 is able to replace release paper used in the market, not only eliminating the need to use expensive manufacturing equipment, but also, because of the simple manufacturing process, reducing the use of man power, thereby effectively reducing the manufacturing process time and manufacturing costs, and further achieving the effectiveness of increasing the manufacturing process efficiency.

### 4. Reusable

Using the reusable release layer 72 eliminates the need to carry out the first drying and heating step 900 and the first preparation step 901 while enabling lamination of the release layer 72 to the carrier layer 71, which, in one aspect, effectively shortens the line of production and increases efficiency, and, in another aspect, reduces the use of polypropylene, thereby achieving the environmental requirements for recycling to minimize environment pollution.

In conclusion, the thin film article with separable carrier and manufacturing method thereof of the present invention uses reciprocal procedural processing between the first drying and heating step 900, the first preparation step 901, the second drying and heating step 902, the second preparation step 903, the lamination step 904, the third drying and heating step 905, the coating step 906, the separating step 907, the lamination cycle step 908, and the cutting and rolling up step 909, and uses the design of the ultra thin carrier layer 71 whereby, after the release layer 72 is separated from the carrier layer 71, the thin film layer 73 is then supported by the carrier layer 71, which will not cause creasing on the surface of the thin film layer 73 because of the release layer 72 being torn off, thereby achieving an increase in the yield of merchantable products. Furthermore, the release layer 72 is able to replace release paper used in the market, not only because of the simple manufacturing process enables reducing use of manpower and effectively decreases the manufacturing process time and manufacturing costs, but also further increases the manufacturing process efficiency. Accordingly, is indeed able to achieve the object of the present invention.

## Claims

1. A manufacturing method for a thin film article with separable carrier, comprising steps of:
a) a first preparation step (901), preparing a release layer (72) made from a polypropylene material, wherein the thickness of the release layer (72) lies between 0.05 mm and 0.3 mm;
b) a second preparation step (903), preparing a carrier layer (71) made from polyethylene material, wherein the thickness of the carrier layer (71) lies between 0.01 mm and 0.1 mm;
c) a lamination step (904), separably laminating the release layer (72) onto a surface of the carrier layer (71) to obtain a top-bottom laminated separable carrier;
**characterized in** further comprising
d) a coating step (906), coating a low-hardness material onto the other surface of the carrier layer (71) to obtain a thin film substrate with a lamination of the separable carrier, wherein said low-hardness material has a hardness range that lies between Shore hardness 65 Shore D to 55 Shore A; and
e) a separating step (907), separating the release layer (72) on the thin film substrate from the carrier layer (71) to obtain the thin film article (7).

2. The manufacturing method for thin film article with separable carrier according to claim 1, further comprising a lamination cycle step (908) implemented after carrying out the separating step (907); in the lamination cycle step (908), after separating the release layer (72) from the thin film substrate, lamination of the carrier layer (71) in the second preparation step (903) is repeated, and then the lamination step (904), the coating step (906), and the separating step (907) are repeated to obtain another of the thin film article (7).

3. The manufacturing method for thin film article with separable carrier according to claim 1, further comprising a cutting and rolling up step (909) implemented after carrying out the separating step (907); in the cutting and rolling up step (909), an appropriate length of the thin film article (7) separated from the release layer (72) is chosen for cutting and rolling up.

4. The manufacturing method for thin film article with separable carrier according to claim 1, wherein, in the first preparation step (901), the polypropylene is extruded and flattened prior to output to obtain the uniformly thin release layer (72).

5. The manufacturing method for thin film article with separable carrier according to claim 1, wherein, in the second preparation step (903), the polyethylene is extruded and flattened prior to output to obtain the uniformly thin carrier layer (71).

6. The manufacturing method for thin film article with separable carrier according to claim 1, further comprising a first drying and heating step (900) implemented before the first preparation step (901), and a second drying and heating step (902) that lies between the first preparation step (901) and the second preparation step (903); in the first drying and heating step (900), the polypropylene is dried and then heated to melt the polypropylene; and in the second drying and heating step (902), the polyethylene is dried and then heated to melt the polyethylene.

7. The manufacturing method for thin film article with separable carrier according to claim 1, further comprising a third drying and heating step (905) positioned between the laminating step (904) and the coating step (906); in the third drying and heating step (905), the low-hardness material is dried and then heated to melt the low-hardness material, wherein, the low-hardness material is made from a thermoplastic polyurethane material.

8. A thin film article with separable carrier, comprising:
a carrier layer (71) made from a polyethylene material, having a first surface (711) and an opposite second surface (712), wherein the thickness of the carrier layer (71) lies between 0.01 mm and 0.1 mm; and
a release layer (72) separably laminated onto a first surface (711) of the carrier layer (71), and made from a polypropylene material, wherein the thickness of the release layer (72) lies between 0.05 mm and 0.3 mm, **characterized in** further comprising a thin film layer (73) disposed on a second surface (712) of the carrier layer (71), wherein the thin film layer (73) is made from a low-hardness material and has a hardness range that lies between Shore hardness 65 Shore D to 55 Shore A.

9. The thin film article with separable carrier according to claim 8, wherein the low-hardness material is a thermoplastic polyurethane material, and has a thickness that lies between 0.03 mm and 0.005 mm.

## Patentansprüche

1. Herstellungsverfahren für einen Dünnschichtartikel mit trennbarem Träger, das die folgenden Schritte umfasst:
a) einen ersten Fertigungsschritt (901), wobei eine Trennschicht (72) aus einem Polypropylen-Werkstoff gefertigt wird, wobei die Dicke der Trennschicht (72) zwischen 0,05 mm und 0,3 mm liegt;
b) einen zweiten Fertigungsschritt (903), wobei eine Trägerschicht (71) aus einem Polyethylen-Werkstoff gefertigt wird, wobei die Dicke der Trägerschicht (71) zwischen 0,01 mm und 0,1 mm liegt;
c) einen Laminierungsschritt (904), wobei die Trennschicht (72) trennbar auf eine Oberfläche der Trägerschicht (71) laminiert wird, um einen Oberseite - Unterseite laminierten trennbaren Träger zu erhalten,
**dadurch gekennzeichnet, dass** es ferner Folgendes umfasst:
d) einen Beschichtungsschritt (906), wobei die andere Oberfläche der Trägerschicht (71) mit einem Werkstoff geringer Härte beschichtet wird, um ein Dünnschichtsubstrat mit einer Laminierung des trennbaren Trägers zu erhalten, wobei der Werkstoff geringer Härte einen Härtebereich aufweist, der zwischen der Shore-Härte 65 Shore D bis 55 Shore A liegt, und
e) einen Trennschritt (907), wobei die Trennschicht (72) auf dem Dünnschichtsubstrat von der Trägerschicht (71) getrennt wird, um den Dünnschichtartikel (7) zu erhalten.

2. Herstellungsverfahren für einen Dünnschichtartikel mit trennbarem Träger nach Anspruch 1, das ferner einen Laminierungszyklus-Schritt (908) umfasst, der nach Durchführen des Trennschritts (907) ausgeführt wird; wobei bei dem Laminierungszyklus-Schritt (908) nach Trennen der Trennschicht (72) von dem Dünnschichtsubstrat die Laminierung der Trägerschicht (71) in dem zweiten Fertigungsschritt (903) wiederholt wird und dann der Laminierungsschritt (904), der Beschichtungsschritt (906) und der Trennschritt (907) wiederholt werden, um noch einen anderen Dünnschichtartikel (7) zu erhalten.

3. Herstellungsverfahren für einen Dünnschichtartikel mit trennbarem Träger nach Anspruch 1, das ferner einen Schneide- und Aufrollschritt (909) umfasst, der nach Durchführen des Trennschritts (907) ausgeführt wird, wobei bei dem Schneide- und Aufrollschritt (909) eine geeignete Länge des Dünnschichtartikels (7), der von der Trennschicht (72) getrennt ist, zum Schneiden und Aufrollen ausgewählt wird.

4. Herstellungsverfahren für einen Dünnschichtartikel mit trennbarem Träger nach Anspruch 1, wobei bei dem ersten Fertigungsschritt (901) das Polypropylen extrudiert und geglättet wird, bevor es ausgegeben wird, um die gleichmäßig dünne Trennschicht (72) zu erhalten.

5. Herstellungsverfahren für einen Dünnschichtartikel mit trennbarem Träger nach Anspruch 1, wobei bei dem zweiten Fertigungsschritt (903) das Polyethylen extrudiert und geglättet wird, bevor es ausgegeben wird, um die gleichmäßig dünne Trägerschicht (71) zu erhalten.

6. Herstellungsverfahren für einen Dünnschichtartikel mit trennbarem Träger nach Anspruch 1, das ferner einen ersten Trocknungs- und Erhitzungsschritt (900), der vor dem ersten Fertigungsschritt (901) ausgeführt wird, und einen zweiten Trocknungs- und Erhitzungsschritt (902), der zwischen dem ersten Fertigungsschritt (901) und dem zweiten Fertigungsschritt (903) liegt, umfasst, wobei bei dem ersten Trocknungs- und Erhitzungsschritt (900) das Polypropylen getrocknet und dann erhitzt wird, um das Polypropylen zu schmelzen, und wobei bei dem zweiten Trocknungs- und Erhitzungsschritt (902) das Polyethylen getrocknet und dann erhitzt wird, um das Polyethylen zu schmelzen;

7. Herstellungsverfahren für einen Dünnschichtartikel mit trennbarem Träger nach Anspruch 1, das ferner einen dritten Trocknungs- und Erhitzungsschritt (905) umfasst, der zwischen dem Laminierungsschritt (904) und dem Beschichtungsschritt (906) positioniert ist; wobei bei dem dritten Trocknungs- und Erhitzungsschritt (905) der Werkstoff geringer Härte getrocknet und dann erhitzt wird, um den Werkstoff geringer Härte zu schmelzen, wobei der Werkstoff geringer Härte aus einem thermoplastischen Polyurethan-Werkstoff ist.

8. Dünnschichtartikel mit trennbarem Träger, der Folgendes umfasst:
eine Trägerschicht (71) aus einem Polyethylen-Werkstoff, die eine erste Oberfläche (711) und eine gegenüberliegende zweite Oberfläche (712) aufweist, wobei die Dicke der Trägerschicht (71) zwischen 0,01 mm und 0,1 mm liegt, und eine Trennschicht (72), die trennbar auf eine erste Oberfläche (711) der Trägerschicht (71) laminiert und aus einem Polypropylen-Werkstoff ist, wobei die Dicke der Trennschicht (72) zwischen 0,05 mm und 0,3 mm liegt, **dadurch gekennzeichnet, dass** sie ferner eine Dünnfilmschicht (73) umfasst, die auf einer zweiten Oberfläche (712) der Trägerschicht (71) angeordnet ist, wobei die Dünnfilmschicht (73) aus einem Werkstoff geringer Härte ist und einen Härtebereich aufweist, der zwischen der Shore-Härte 65 Shore D bis 55 Shore A liegt.

9. Dünnschichtartikel mit trennbarem Träger nach Anspruch 8, wobei der Werkstoff geringer Härte ein thermoplastischer Polyurethan-Werkstoff ist und eine Dicke aufweist, die zwischen 0,03 mm und 0,005 mm liegt.

## Revendications

1. Procédé de fabrication pour un article de film à couches minces avec un support séparable, comprenant les étapes de:
a) une première étape de préparation (901), préparant une couche de libération (72) réalisée en un matériau de polypropylène, dans lequel l'épaisseur de la couche de libération (72) se trouve entre 0,05 mm et 0,3 mm;
b) une seconde étape de préparation (903), préparant une couche de support (71) réalisée en matériau de polyéthylène, dans lequel l'épaisseur de la couche de support (71) se trouve entre 0,01 mm et 0,1 mm;
c) une étape de laminage (904), laminant séparément la couche de libération (72) sur une surface de la couche de support (71) pour obtenir un support séparable laminé de haut en bas;
**caractérisé en ce qu'**il comprend en outre
d) une étape de revêtement (906), revêtant un matériau à faible dureté sur l'autre surface de la couche de support (71) pour obtenir un substrat de film à couches minces avec un laminage du support séparable, dans lequel ledit matériau à faible dureté présente une plage de dureté qui se trouve entre 65 de dureté Shore D et 55 de dureté Shore A; et
e) une étape de séparation (907), séparant la couche de libération (72) sur le substrat de film à couches minces de la couche de support (71) pour obtenir l'article de film à couches minces (7).

2. Procédé de fabrication pour un article de film à couches minces avec un support séparable selon la revendication 1, comprenant en outre une étape de cycle de laminage (908) réalisée après la réalisation de l'étape de séparation (907) ; dans l'étape de cycle de laminage (908), après la séparation de la couche de libération (72) du substrat de film à couches minces, le laminage de la couche de support (71) dans la seconde étape de préparation (903) est répété, et ensuite l'étape de laminage (904), l'étape de revêtement (906), et l'étape de séparation (907) sont répétées pour obtenir un autre de l'article de film à couches minces (7).

3. Procédé de fabrication pour un article de film à couches minces avec un support séparable selon la revendication 1, comprenant en outre une étape de coupe et d'enroulement (909) réalisée après la réalisation de l'étape de séparation (907); dans l'étape de coupe et d'enroulement (909), une longueur appropriée de l'article de film à couches minces (7) séparée de la couche de libération (72) est choisie pour la coupe et l'enroulement.

4. Procédé de fabrication pour un article de film à couches minces avec un support séparable selon la revendication 1, dans lequel, dans la première étape de préparation (901), le polypropylène est extrudé et aplati avant de sortir pour obtenir la couche de libération uniformément mince (72).

5. Procédé de fabrication pour un article de film à couches minces avec un support séparable selon la revendication 1, dans lequel, dans la seconde étape de préparation (903), le polyéthylène est extrudé et aplati avant de sortir pour obtenir la couche de support uniformément mince (71).

6. Procédé de fabrication pour un article de film à couches minces avec un support séparable selon la revendication 1, comprenant en outre une première étape de séchage et de chauffage (900) réalisée avant la première étape de préparation (901), et une deuxième étape de séchage et de chauffage (902) qui se trouve entre la première étape de préparation (901) et la seconde étape de préparation (903); dans la première étape de séchage et de chauffage (900), le polypropylène est séché et ensuite chauffé pour faire fondre le polypropylène; et dans la deuxième étape de séchage et de chauffage (902), le polyéthylène est séché et ensuite chauffé pour faire fondre le polyéthylène.

7. Procédé de fabrication pour un article de film à couches minces avec un support séparable selon la revendication 1, comprenant en outre une troisième étape de séchage et de chauffage (905) positionnée entre l'étape de laminage (904) et l'étape de revêtement (906); dans la troisième étape de séchage et de chauffage (905), le matériau à faible dureté est séché et ensuite chauffé pour faire fondre le matériau à faible dureté, dans lequel le matériau à faible dureté est réalisé en un matériau de polyuréthane thermoplastique.

8. Article de film à couches minces avec un support séparable comprenant:
une couche de support (71) réalisée en un matériau de polyéthylène, présentant une première surface (711) et une seconde surface opposée (712), dans lequel l'épaisseur de la couche de support (71) se trouve entre 0,01 mm et 0,1 mm; et
une couche de libération (72) laminée de manière séparable sur une première surface (711) de la couche de support (71), et réalisée en un matériau de polypropylène, dans lequel l'épaisseur de la couche de libération (72) se trouve entre 0,05 mm et 0,3 mm, **caractérisé en ce qu'**il comprend en outre une couche de film à couches minces (73) disposée sur une seconde surface (712) de la couche de support (71), dans lequel la couche de film à couches minces (73) est réalisée en un matériau à faible dureté et présente une plage de dureté qui se trouve entre 65 de dureté Shore D et 55 de dureté Shore A.

9. Article de film à couches minces avec un support séparable selon la revendication 8, dans lequel le matériau à faible dureté est un matériau de polyuréthane thermoplastique, et présente une épaisseur qui se trouve entre 0,03 mm et 0,005 mm.
